# FASCICULE DE BREVET EUROPEEN

(11) **EP 3 100 613 B1**
(45) Date de publication et mention de la délivrance du brevet: **18.03.2020**
(21) Numéro de dépôt: 16001234.0
(22) Date de dépôt: 01.06.2016
(51) Int. Cl.: A23D 7/00

(54) **UTILISATION D'UNE STEARINE DE KARITE EN TANT QU'AGENT DE TEXTURE DANS DES EMULSIONS EAU-DANS-HUILE**
VERWENDUNG VON SHEABUTTER-STEARIN ALS STRUKTURMITTEL IN WASSER-ÖL-EMULSIONEN
USE OF A SHEA STEARIN AS TEXTURISING AGENT IN WATER-IN-OIL EMULSIONS

(30) Priorité: 01.06.2015 FR 1501127; 16.07.2015 FR 1501516
(43) Date de publication de la demande: 07.12.2016
(73) Titulaire: St. Hubert, 94150 Rungis (FR)
(72) Inventeur: Renault, Anne, 75011 Paris (FR); Ferrari, Audrey, 54425 Pulnoy (FR)
(74) Mandataire: Barbot, Willy

(56) Documents cités:
- EP-A1- 0 498 487
- EP-A2- 0 032 808
- WO-A1-95/07620
- WO-A1-98/19554
- WO-A1-2012/084420
- Anonymous: "Invisibility of Shea in the food industry | GSA", , 16 février 2012 (2012-02-16), XP055259311, Extrait de l'Internet: URL:http://www.globalshea.com/news/past/36 /Invisibility-of-Shea-in-the-food-industry [extrait le 2016-03-17]

## Description

### Domaine de l'invention

La présente invention est relative au domaine des émulsions eau-dans-huile comestibles et, plus particulièrement, à celui des matières grasses tartinables comme la margarine.

### Arrière plan technologique de l'invention

La société actuelle est particulièrement sensibilisée aux problématiques de santé conditionnées par le mode de vie et, notamment, par le comportement alimentaire des individus. En effet, si les avancées médicales contribuent à l'éradication de certaines maladies, l'augmentation de l'espérance de vie amène elle, à l'inverse, à l'augmentation d'autres maladies du fait du vieillissement de la population. Face à ces pathologies en recrudescence, les consommateurs semblent aujourd'hui vouloir changer leurs habitudes alimentaires et leur hygiène de vie de manière à préserver, au maximum, leur santé avec le vieillissement.

Face à cette évolution du comportement de ses consommateurs, l'industrie agroalimentaire cherche à développer de nouveaux produits innovants favorisant la santé des individus. Ainsi, les produits nouvellement commercialisés voient souvent leur teneur en lipides ou en matière grasse réduite (plus spécifiquement en acides gras saturés), dans l'idée de limiter les risques d'obésité, de maladie cardiovasculaire ou de diabète par exemple.

Les matières grasses tartinables telles que le beurre et la margarine sont des composantes majeures de l'alimentation dont les caractéristiques sensorielles (fonte, arôme, tartinabilité) sont dues à la teneur et aux propriétés physico-chimiques des lipides qu'elles renferment.

Si la diminution du taux de matière grasse dans ces aliments était la solution la plus simple en terme de développement, elle a pour conséquence la perte des qualités sensorielles de ces produits. Plus spécifiquement, dans la formulation de la margarine, les acides gras saturés sont connus pour jouer un rôle essentiel dans la texture et la fermeté de la margarine. Les margarines, qui possèdent une proportion d'acides gras saturés supérieure au beurre, présentent de ce fait une structure éloignée de celui-ci.

De par les propriétés physiques et organoleptiques qu'elle confère, la stéarine de palme est utilisée de longue date dans la fabrication de margarine. Riche en acides gras saturés, celle-ci permet d'obtenir des matières tartinables bénéficiant de bonnes propriétés organoleptiques.

Maintenant, se pose le problème de développer de nouvelles matières tartinables qui soient allégées en matière grasse et, notamment, en acides gras saturés, le tout en maintenant de bonnes propriétés organoleptiques, ce qui ne constitue en aucun cas une sinécure.

### Sommaire de l'invention

Etonnamment, les inventeurs ont mis en évidence qu'il était possible d'obtenir, en substituant la stéarine de palme par une stéarine de karité une émulsion eau-dans-huile bénéficiant tout à la fois des propriétés nutritionnelles intéressantes des margarines, avec simultanément une moindre adhérence (meilleure étabilité), un meilleur fondant et surtout une texture cassante approchant celle du beurre (à la différence des margarines obtenues avec la stéarine de palme).

Aussi, la présente invention vise une telle margarine aux propriétés améliorées et porte sur une émulsion eau-dans-huile comestible prenant la forme d'une matière grasse tartinable comprenant :
- une teneur en matière grasse comprise entre 35 et 55% avec
- une teneur en stéarine de karité comprise entre 4 et 20% dans la phase grasse,
laquelle émulsion présente une teneur en solide de la phase grasse inférieure à 10% à 20°C, de préférence inférieure à 5%.

La présente invention concerne également un procédé de préparation d'une telle émulsion et l'utilisation d'une stéarine de karité en tant qu'agent de texture dans des émulsions eau-dans-huile.

### Description des figures

La figure 1 schématise une courbe de texture.
La figure 2 montre la courbe de texture obtenue en lien avec différentes émulsions eau-dans-huile comprenant de la stéarine de palme.
La figure 3 montre la courbe de texture obtenue en lien avec différentes émulsions eau-dans-huile comprenant de la stéarine de karité.
La figure 4 montre l'évolution de la teneur en solide en fonction de la température et pour une margarine obtenue à partir d'une émulsion eau-dans-huile comprenant de la stéarine de palme ou comprenant de la stéarine de karité.

### Description détaillée de l'invention

Un premier objet de l'invention concerne une émulsion eau-dans-huile comestible prenant la forme d'une matière grasse tartinable comprenant :
- une teneur en matière grasse comprise entre 35 et 55% avec
- une teneur en stéarine de karité comprise entre 4 et 20% dans la phase grasse,
laquelle émulsion présente une teneur en solide de la phase grasse inférieure à 10% à 20°C, de préférence inférieure à 5%.

Concernant le karité (*Vitellaria paradoxa*), il s'agit de l'unique espèce connue du genre *Vitellaria* et de la famille des *Sapotaceae*, et ce sont les fruits de cet arbre qui servent à la fabrication du beurre de karité dont est ensuite extraite la stéarine de karité (fraction solide).

Dans l'art antérieur, on peut identifier le brevet EP 0032808 décrivant un matériau plastique incluant du beurre et de l'huile de palme ou de la stéarine de karité. Maintenant ce brevet vise des compositions présentant des structures bien particulières en vue d'obtenir des crèmes, voire des crèmes fouettées. Ainsi, si la teneur en solide du beurre est de l'ordre de 13% à 20°C, celle des compositions visées par le brevet EP 0032808 sont elles d'au moins 15% à 20°C. La teneur en solide de la phase grasse (« solid fat content ») constitue un élément important pour la connaissance des propriétés rhéologiques d'une graisse et renseigne parallèlement sur sa structure. Il en ressort que les matériaux visés par le brevet EP 0032808 sont bien différents des émulsions eau-dans-huile selon l'invention.

Dans l'art antérieur, on trouve également dans la demande internationale WO 95/07620 une émulsion eau-dans-huile qui comprend une teneur en matière grasse de 80 % dont notamment 12 % de stéarine de karité, et dont la teneur en matière solide de la phase grasse est de 4.4 % à 20°C. Toutefois, du fait de la teneur en matière grasse élevée, les émulsions eau-dans-huile selon ce document ne sont pas des matières grasses tartinables.

Les inventeurs ont maintenant mis en évidence qu'une stéarine de karité permettait d'obtenir une matière grasse tartinable correspondant à une émulsion eau-dans-huile comestible qui présente des propriétés organoleptiques très intéressantes au regard de celles utilisant une stéarine de palme avec notamment une consistance de la margarine obtenue s'approchant de la dureté du beurre.

Avantageusement, la teneur en stéarine de karité de l'émulsion eau-dans-huile selon l'invention est inférieure ou égale à 15% et, de préférence, elle est inférieure à 10%.

Avantageusement encore, l'émulsion eau-dans-huile selon l'invention ne comprend pas d'huile de palme et/ou de stéarine de palme.

L'émulsion eau-dans-huile selon l'invention pourra contenir soit de la matière grasse d'origine exclusivement végétale, soit un mélange de matières grasses tout à la fois d'origine végétale et d'origine animale.

Dans le cas d'un mélange de matières grasses d'origine végétale et animale, l'émulsion selon l'invention pourra comprendre du beurre dont la teneur est comprise entre 5 et 50 %, de préférence entre 10 et 30 %.

Maintenant, l'émulsion selon l'invention présentera une phase grasse dont la teneur en beure est inférieure à 50%.

En outre cette matière grasse ou ce mélange de manières grasses utilisé pourra également comprendre des matières grasses hydrogénées, inter estérifiées, ou fractionnées. A titre d'exemples de matières grasses d'origine animale adaptées, on pourra citer le beurre ou Matière Grasse Laitière Anhydre ou les huiles marines.

Avantageusement toutefois, l'émulsion selon l'invention ne comprendra pas de matières grasses hydrogénées.

Pour ce qui est des matières grasses d'origine végétale adaptées, celles-ci comprennent l'huile de tournesol, l'huile de soja, l'huile de noix de coco, l'huile de colza, de l'huile de lin, de l'huile d'olive, l'huile de maïs, le beurre de cacao ou leurs fractions (ex. stéarine), l'huile de microalgues, l'huile de poisson, l'huile de chia, l'huile de cameline ou des combinaisons de celles-ci. Les mélanges de matières grasses interestérifiées de ces matières grasses ou optionnellement avec d'autres matières grasses sont également naturellement comprises dans la présente invention.

Par « matière grasse tartinable », on entend, un mélange de matières grasses d'origine animale (notamment laitières) et/ou d'origine végétale, d'eau et d'ingrédients de type arômes, colorants, texturants, émulsifiants. Des exemples de telles matières grasses tartinables sont, par exemple, le beurre et la margarine.

L'émulsion eau-dans-huile selon l'invention présente une structure stable (aucun phénomène de déstabilisation tel que le crémage, le déphasage, la sédimentation, la floculation et/ou la coalescence) à 4°C pendant plus d'une semaine, typiquement pendant plus de trois mois.

Selon un mode de réalisation spécifique, l'émulsion eau-dans-huile selon l'invention comprendra un mélange de matières grasses d'origine végétale et d'origine animale, lequel mélange pourra comprendre, outre la stéarine de karité, du beurre, de l'huile de tournesol, de l'huile de soja, de l'huile de noix de coco, de l'huile de colza, de l'huile de lin, de l'huile d'olive, de l'huile de maïs, du beurre de cacao, l'huile de microalgues ou leurs fractions (ex. stéarine), .

Maintenant, et de manière préférée, la teneur en matière grasse d'origine végétale sera d'au moins 25%, voire d'au moins 35% du produit fini.

Selon un autre mode de réalisation spécifique, l'émulsion eau-dans-huile selon l'invention comprendra uniquement des matières grasses d'origine végétale, lesquelles matières grasses correspondront de préférence à un mélange comprenant, outre la stéarine de karité, de l'huile de tournesol, de l'huile de soja, de l'huile de noix de coco, de l'huile de colza, de l'huile de lin, de l'huile d'olive, de l'huile de maïs, du beurre de cacao, de l'huile de microalgues ou leurs fractions (ex. stéarine).

Du fait de leurs propriétés intéressantes, l'émulsion eau-dans-huile selon l'invention pourra aussi comprendre des acides gras polyinsaturés ou PUFA. Les PUFA préférés sont les oméga-3 (ω3) et les oméga-6 (ω6) tels que l'acide alpha linoléique (ALA), l'acide docosahexaénoïque (DHA) et l'acide éicosapentaénoïque (EPA). En ce qui concerne les oméga-3, on les trouve en grandes quantités dans certains poissons gras, dans les graines de chia, le lin, la noix, la cameline, le colza et le soja.

L'émulsion eau-dans-huile selon l'invention pourra comprendre en outre au moins un émulsifiant. L'émulsifiant est de manière préférée un émulsifiant pour les émulsions eau-dans-huile choisi dans le groupe comprenant les monoglycérides distillés, les esters d'acide citrique de monoglycérides, les esters diacétyl acétique de monoglycérides, les esters d'acide lactique de monoglycérides, les mono- et diglycérides, les esters de polyglycérols d'acides gras, les esters de sorbitan d'acides gras ou la lécithine.

On pourra également envisager l'ajout d'un agent gélifiant ou épaississant, lequel agent est capable de perturber la mobilité de l'eau au sein de la composition selon l'invention, voire de la fixer.

De manière optionnelle, des protéines peuvent aussi être ajoutées à l'émulsion de l'invention pour améliorer le goût, la saveur et/ou la valeur nutritionnelle de l'émulsion.

Plus généralement, l'émulsion comestible de l'invention pourra contenir d'autres ingrédients tels que des conservateurs, des vitamines, des arômes, des colorants comme le bêta-carotène ou encore des antioxydants.

Un autre objet de l'invention concerne un procédé de préparation d'une émulsion telle que décrite précédemment et qui comprend les étapes de :
a) préparation de la phase grasse,
b) préparation de la phase aqueuse,
c) addition de la phase aqueuse dans la phase grasse sous agitation forte pour créer l'émulsion,
d) pasteurisation de l'émulsion obtenue à l'étape c),
e) pré-refroidissement de l'émulsion,
f) cristallisation et malaxage de l'émulsion, et
g) Conditionnement

Le procédé selon l'invention permet d'obtenir, après solidification (cristallisation), une émulsion eau-dans-huile bénéficiant d'une étabilité améliorée et/ou d'une texture cassante approchant celle du beurre.

L'étape a) de préparation de la phase grasse se fait habituellement à chaud (température de préparation est comprise entre 55 et 75°C) par des techniques bien connues de l'homme du métier, en utilisant notamment un mélangeur à pâles. Cette étape se fait en mélangeant la stéarine de karité avec la ou les autres matières grasses de l'émulsion.

L'étape b) de préparation de la phase aqueuse est réalisée par des techniques bien connues de l'homme du métier. La température de préparation est comprise entre 40 et 65°C. L'agitation est de préférence effectuée par un mélangeur à pâles.

L'étape c) de dispersion de la phase aqueuse dans la phase grasse est réalisée par des techniques bien connues de l'homme du métier. L'agitation est de préférence effectuée par un homogénéisateur ou agitateur de type rotor/stator.

L'étape d) de pasteurisation est réalisée par des techniques bien connues de l'homme du métier. De préférence, la pasteurisation est réalisée à une température supérieure à 70°C (par exemple 86°C) pendant quelques secondes.

L'étape e) de pré-refroidissement de l'émulsion est réalisée par des techniques bien connues de l'homme du métier. De préférence, cette étape est réalisée de sorte d'obtenir un produit en sortie de cette étape à une température inférieure à 50°C, de préférence inférieure à 40°C

L'étape f) de cristallisation de l'émulsion est réalisée par des techniques bien connues de l'homme du métier. De préférence, elle est réalisée par passages successifs de l'émulsion dans des échangeurs thermiques à surfaces raclées et malaxeurs. De préférence, la température de sortie de l'émulsion est comprise entre 5 et 20°C, de préférence entre 10 et 15°C.

Le pH de la phase aqueuse peut être établi à la valeur désirée, entre autres pour influencer l'impression de goût acide ou basique et pour influencer la stabilité microbienne. De manière préférée, le pH de la phase aqueuse dans l'émulsion de l'invention est compris entre 4.00et 5.60.

Un dernier objet de l'invention porte sur l'utilisation d'une stéarine de karité, en tant qu'agent de texture dans des émulsions eau-dans-huile telles que décrites précédemment, lesquelles émulsions présentent une teneur en solide de la phase grasse à 20°C inférieure à 10%, de préférence inférieure même à 5%.

En effet, l'émulsion eau-dans huile obtenue bénéficie tout à la fois d'une étabilité améliorée, d'un fondant amélioré également et également d'une texture cassante, laquelle approche celle du beurre.

Avantageusement donc, la stéarine de karité est utilisé à titre d'agent de texture cassant dans des émulsions eau-dans-huile telles que décrites précédemment.

Les exemples qui suivent sont fournis à titre d'illustration et ne sauraient limiter la portée de la présente invention.

### Exemples : Etude comparative de deux émulsions eau-dans-huile.

| **Composants** | **Emulsion stéarine de karité (teneur %)** | **Référence « stéarine de palme » (teneur %)** |
|---|---|---|
| Stéarine de karité | 4-10 | - |
| Stéarine de palme | - | 5-10 |
| Matière grasse laitière | 15-20 | 15-20 |
| Huile de noix de coco | 10-15 | 10-15 |
| Huile de Colza | 20-30 | 20-30 |
| Emulsifiant | <1 | <1 |
| Arôme | <1 | <1 |
| Colorant | <1 | <1 |
| Sel | <1 | <1 |
| Lait | <5 | <5 |
| Conservateur | <1 | <1 |
| Arôme | <1 | <1 |
| eau | 50-55 | 50-55 |

Les émulsions sont préparées sous agitation par un transfert de la phase aqueuse vers la phase grasse. Après pasteurisation, l'émulsion est refroidie et malaxée en passant par différents cylindres de froid et malaxeurs. La cristallisation se poursuit en maintenant l'émulsion à 4°C pendant au moins 15 jours.

### Mesure de la texture

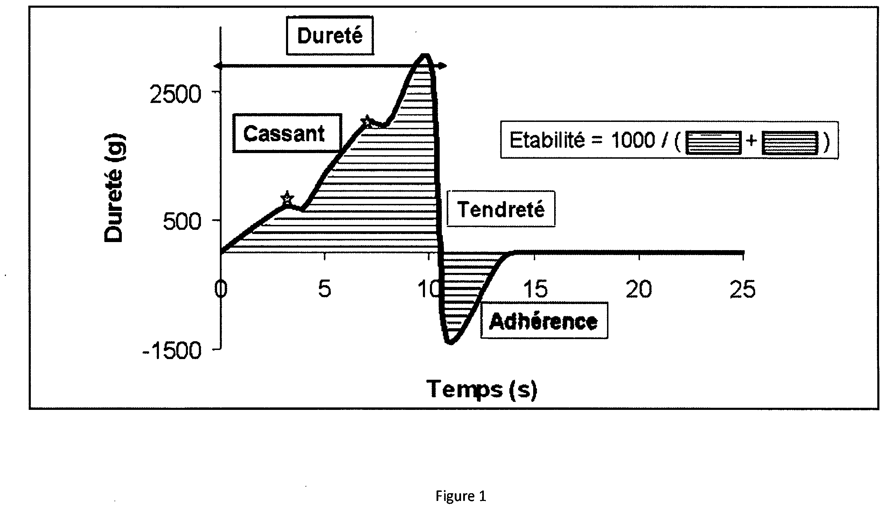

La texture et les autres caractéristiques physiques de chacune des deux types de margarines sont mesurées au moins 15 jours après fabrication par pénétrométrie à l'aide d'un texturomètre TA-XTPLUS (SWANTECH) selon les instructions du fabricant. Schématiquement, une sonde de forme conique pénètre dans la margarine puis remonte à sa position initiale. Le texturomètre, couplé à un logiciel informatique, enregistre la force de résistance émise par la margarine en contact avec le cône. L'analyse de la courbe force-temps, permet de calculer cinq paramètres qui sont identifiés dans la figure 1 et qui sont :
✔ ***Dureté** :* la force maximale.
✔ ***Tendreté :*** (*la surface positive*) représente le travail nécessaire pour introduire le cône dans la margarine.
✔ ***Adhérence :*** (*la surface négative*) correspond à la résistance émise par le produit lors de la remontée du cône.
✔ ***Etabilité*** : définie comme l'inverse de la somme des deux surfaces. Cette valeur est multipliée par mille afin de faciliter la lecture des résultats.
✔ ***Cassant*** : le nombre de points d'impact lors de la pénétration du cône dans la margarine.

En l'espèce, les mesures de texture ont été réalisées après calibrage de l'appareil avec un cône d'angle de 60° pour la pénétration dans le produit, une vitesse constante de 2mm/s et sur une distance de 20mm. Pour chaque type de margarine, les mesures ont été répétées quatre fois afin de valider la reproductibilité des résultats.

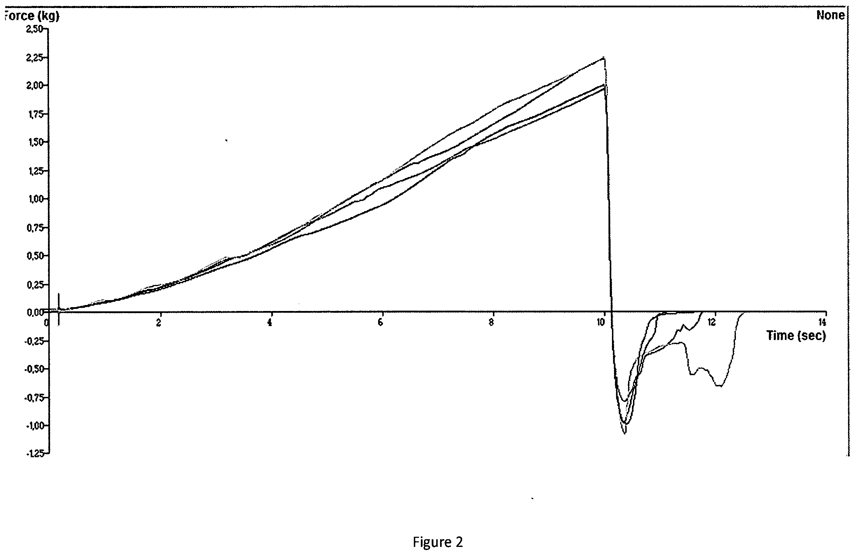

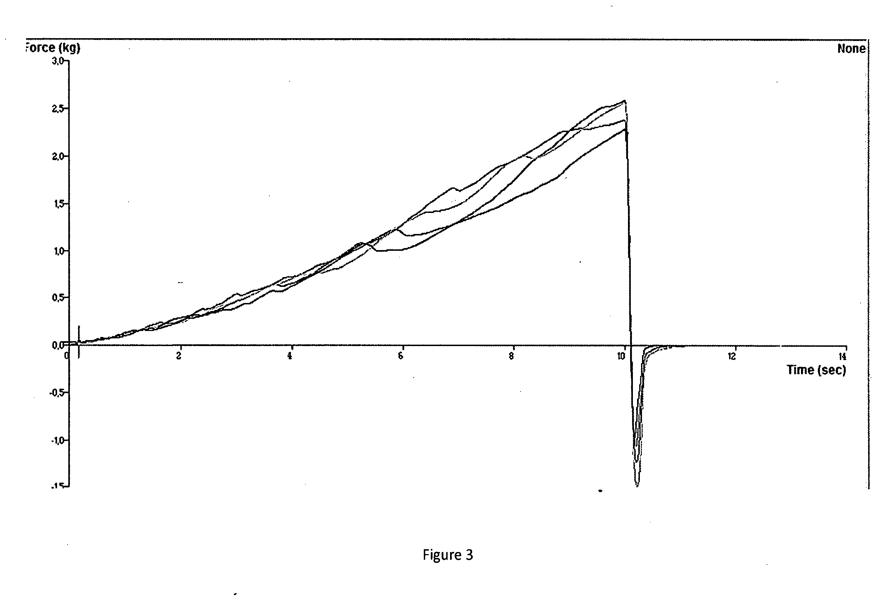

Les figures 2 et 3 montrent les résultats obtenus respectivement avec les émulsions eau-dans-huile contrôle (stéarine de palme) et stéarine de karité (II : 38-49) (4 échantillons pour chaque type)

Les résultats montrent que, sur la première partie de la courbe, on note une augmentation lisse pour l'échantillon témoin (figure 2). Au contraire, les résultats montrent que la margarine selon l'invention présente dans cette même première partie, un grand nombre de pics (figure 3). A noter qu'une telle augmentation non linéaire est caractéristique d'une texture cassante proche de celle du beurre, laquelle est particulièrement appréciée des consommateurs. En lien avec l'étabilité, les résultats montrent qu'elle est également supérieure dans le cas de la margarine selon l'invention.

### Mesure de la teneur en solides

La mesure de la teneur en solide est réalisée par Résonnance Magnétique Nucléaire (RMN) basse résolution sur les deux types de margarine décrite précédemment.

Dans le détail et après extraction de la phase grasse, les échantillons sont fondus puis placés dans des bains marie à différentes températures pendant 2h. Après ce temps d'incubation, les échantillons sont analysés à l'aide de l'appareil MINISPEC MQ 20 (BRUKER) selon les instructions du fabricant et pour chaque température.

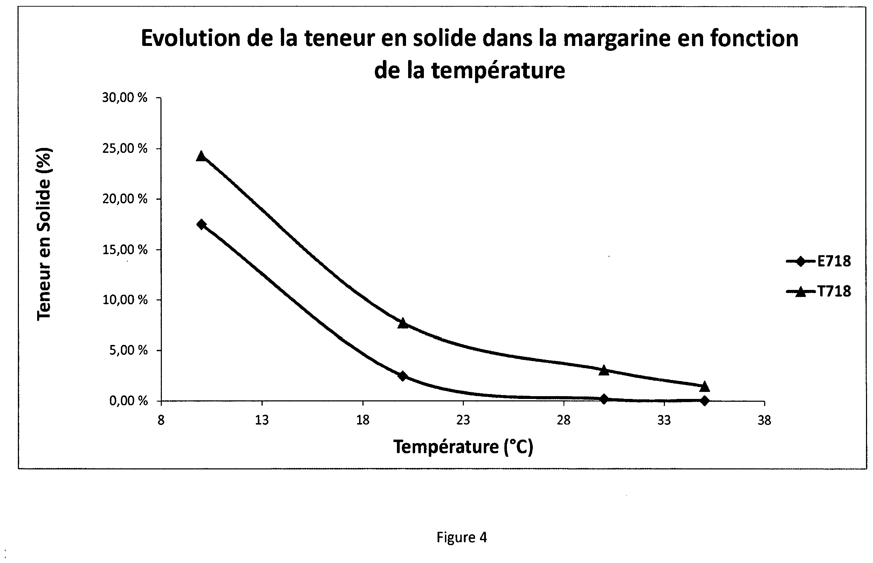

La figure 4 montre l'évolution de la teneur en solides en fonction de la température et pour chaque type de margarine.

Les résultats montrent, de façon intéressante, que les profils des courbes de fonte du témoin et de la margarine selon l'invention sont similaires malgré un taux d'acides gras insaturés bien plus élevés dans cette dernière, ce qui n'était pas attendu. Maintenant, on observe une fonte totale de la margarine selon l'invention plus rapide et surtout une teneur en solide bien inférieure, notamment à 20°C, à celle du témoin. A 30°C, la matière grasse de l'échantillon selon l'invention est totalement fondue contrairement au témoin. Ceci, lui confère un aspect fondant plus marqué et une meilleure libération des arômes.

## Revendications

1. Une émulsion eau-dans-huile comestible prenant la forme d'une matière grasse tartinable comprenant :
- une teneur en matière grasse comprise entre 35 et 55% avec
- une teneur en stéarine de karité comprise entre 4 et 20% dans la phase grasse,
laquelle émulsion présente une teneur en solide de la phase grasse inférieure à 10% à 20°C, de préférence inférieure à 5%.

2. L'émulsion selon la revendication 1, **caractérisée en ce que** la teneur en stéarine de karité est inférieure ou égale à 15%

3. L'émulsion selon l'une quelconque des revendications 1 ou 2, **caractérisée en ce qu'**elle ne comprend pas d'huile de palme et/ou de stéarine de palme.

4. L'émulsion selon l'une quelconque des revendications 1 à 3, **caractérisée en ce que** la teneur en stéarine de karité est inférieure ou égale à 10%.

5. L'émulsion selon l'une quelconque des revendications 1 à 3, **caractérisée en ce qu'**elle comprend un mélange matières grasses d'origine végétale et animales, lequel mélange comprend, outre la stéarine de karité, du beurre, l'huile de tournesol, l'huile de soja, l'huile de noix de coco, l'huile de colza, de l'huile de lin, de l'huile d'olive, l'huile de maïs, le beurre de cacao ou leurs fractions (ex. stéarine), l'huile de microalgues.

6. L'émulsion selon l'une quelconque des revendications 1 à 5, **caractérisée en ce que** la teneur en matière grasse d'origine végétale d'au moins 25%, voire d'au moins 35%du produit fini.

7. L'émulsion selon l'une quelconque des revendications 1 à 6, **caractérisée en ce qu'**elle présente une phase grasse dont la teneur en beure est inférieure à 50%.

8. L'émulsion selon l'une quelconque des revendications 1 à 7, **caractérisée en ce qu'**elle comprend en outre au moins un émulsifiant.

9. Un procédé de préparation d'une émulsion eau-dans-huile selon l'une quelconque des revendications 1 à 8, comprenant les étapes de :
a) préparation de la phase grasse,
b) préparation de la phase aqueuse,
c) addition de la phase aqueuse dans la phase grasse sous agitation forte pour créer l'émulsion,
d) pasteurisation de l'émulsion obtenue à l'étape c),
e) pré-refroidissement de l'émulsion,
f) cristallisation de l'émulsion, et
g) Conditionnement.

10. Une utilisation d'une stéarine de karité, en tant qu'agent de texture dans des émulsions eau-dans-huile telles que définies dans l'une quelconque des revendications 1 à 8.

11. L'utilisation, selon la revendication 10, d'une stéarine de karité en tant qu'agent de texture cassante proche de celle du beurre dans des émulsions eau-dans-huile telles que définies dans l'une quelconque des revendications 1 à 8.

## Patentansprüche

1. Eine essbar Wasser-in-ÖI-Emulsion vom Typ Brotaufstrichfett umfassend:
- Ein Fettgehalt zwischen 15 und 55 % mit
- Einem Shea-Stearin-Gehalt zwischen 4 und 20 % in der Fettphase,
Wobei die Emulsion, einen Feststoffgehalt der Fettphase von weniger als 10 % bei 20 °C, vorzugweise weniger als 5 %, aufweist.

2. Die Emulsion nach Patentanspruch 1, **dadurch gekennzeichnet, dass** die Shea-Stearin-Gehalt kleiner oder gleich 15 % ist.

3. Die Emulsion nach irgendeinem der Patentansprüche 1 oder 2, **dadurch gekennzeichnet, dass** sie kein Palmöl und/oder Palmstearin umfasst.

4. Die Emulsion nach irgendeinem der Patentansprüche 1 bis 3, **dadurch gekennzeichnet, dass** der Shea-Stearin-Gehalt kleiner oder gleich 10 % ist.

5. Die Emulsion nach irgendeinem der Patentansprüche 1 bis 3, **dadurch gekennzeichnet, dass** sie ein Gemisch pflanzlichen und tierischen Fetten umfasst, wobei das Gemisch, neben Shea-Stearin, Butter, Sonnenblumenöl, Sojaöl, Kokosöl, Rapsöl, Leinöl, Olivenöl, Maisöl, Kakaobutter oder deren Fraktionen (z.B. Stearin), Mikroalgenöl umfasst.

6. Die Emulsion nach irgendeinem der Patentansprüche 1 bis 5, **dadurch gekennzeichnet, dass** der Gehalt an pflanzlichen Fett mindestens 25 % oder sogar mindestens 35 % des Endproduktes ist.

7. Die Emulsion nach irgendeinem der Patentansprüche 1 bis 6, **dadurch gekennzeichnet, dass** sie eine Fettphase mit einem Buttergehalt von weniger als 50 % aufweist.

8. Die Emulsion nach irgendeinem der Patentansprüche 1 bis 7, **dadurch gekennzeichnet, dass** sie ferner mindesten ein Emulgator umfasst.

9. Ein Verfahren zur Vorbeneitung einer Waser-in-ÖI Emulsion nach einem der Patentansprüche 1 bis 8, umfassend die folgenden Schritte:
a) Bereitung einer Fettphase,
b) Bereitung einer wässrigen Phase,
c) Hinzufügen der wässrigen Phase in die Fettphase unter starker Schütteln, um die Emulsion zu erzeugen,
d) Pasteurisierung der in Schritt c) erhaltenen Emulsion,
e) Vorkühlung der Emulsion,
f) Kristallisierung der Emulsion, und
g) Verpackung.

10. Eine Verwendung eines Shea-Stearins als Strukturmittel in Wasser-in-ÖI Emulsionen, gemäß irgendeinem der Patentansprüche 1 bis 8.

11. Die Verwendung nach Patentanspruch 10 eines Shea-Stearins, als sprödes, butterähnliches Strukturmittel in Wasser-in-ÖI Emulsionen, gemäß irgendeinem der Patentansprüche 1 bis 8.

## Claims

1. An edible water-in-oil emulsion of the spreadable fats type comprising:
- a fat content of between 15 and 55% with
- a shea stearin content of between 4 and 20% in the fatty phase,
said emulsion having a solid content of the fatty phase of less than 10% at 20°C, preferably less than 5%.

2. The emulsion according to claim 1, **characterized in that** the shea stearin content is less than or equal to 15 %.

3. The emulsion according to any of claims 1 or 2, **characterized in that** it does not comprise palm oil and/or palm stearin.

4. The emulsion according to any of claims 1 to 3, **characterized in that** the shea stearin content is less than or equal to 10 %.

5. The emulsion according to any of claims 1 to 3, **characterized in that** it comprises a mix of vegetable and animal fats, said mix comprises, besides to shea stearin, butter, sunflower oil, soybean oil, coconut oil, rapeseed oil, linseed oil, olive oil, corn oil, cocoa butter or their fractions (e.g. stearin), microalgae oil.

6. The emulsion according to any of claims 1 to 5, **characterized in that** the vegetable fat content is at least 25 %, or even at least 35 % of the final product.

7. The emulsion according to any of claims 1 to 6, **characterized in that** the butter content of the fatty phase is less than 50 %.

8. The emulsion according to any of claims 1 to 7, **characterized in that** it further comprises at least one emulsifier.

9. A process for obtaining a water-in-oil emulsion according to any one of claims 1 to 8, comprising the steps of:
a) Preparing a fatty phase,
b) Preparing an aqueous phase,
c) Adding the aqueous phase in the fatty phase under strong stirring in order to create the emulsion,
d) Pasteurizing the emulsion obtained in step c),
e) Pre-cooling of the emulsion,
f) Crystallization of the emulsion, and
g) Packaging.

10. A use of shea stearin, as a texturing agent in water-in-oil emulsions as defined in any of claims 1 to 8.

11. The use, according to claim 10, of shea stearin as breakable texturing agent similar to butter in water-in-oil emulsions as defined in any of claims 1 to 8.
